# EUROPEAN PATENT APPLICATION

(11) **EP 4 530 698 A1**
(43) Date of publication of application: **02.04.2025**
(21) Application number: 23811962.2
(22) Date of filing: 20.03.2023
(51) Int. Cl.: G02B 27/01, G02B 6/00, B29D 11/00, B29C 45/00

(54) **OPTICAL ELEMENT FOR EPE, DISPLAY DEVICE INCLUDING SAME, AND METHOD FOR MANUFACTURING OPTICAL ELEMENT FOR EPE**

(30) Priority: 23.05.2022 KR 20220063072; 20.09.2022 KR 20220118715
(71) Applicant: Samsung Electronics Co., Ltd., Suwon-si, Gyeonggi-do 16677 (KR)
(72) Inventor: HA, Sangwoo, Suwon-si, Gyeonggi-do 16677 (KR); WON, Jongpil, Suwon-si, Gyeonggi-do 16677 (KR); LEE, Jaesun, Suwon-si, Gyeonggi-do 16677 (KR)
(74) Representative: Appleyard Lees IP LLP
(86) International application number: PCT/KR2023/003675
(87) International publication number: WO 2023/229179

(57) **Abstract**

An exit pupil expansion (EPE) optical device includes a first beam expander including first mirrors and configured to expand a beam width of incident light in a first direction to output expanded light, a second beam expander including second mirrors and configured to expand a beam width of light incident from the first beam expander in a second direction different from the first direction to output in a third direction different from the first direction and the second direction, and a waveguide which includes an exit surface through which light having passed through the first beam expander and the second beam expander is output and in which the first beam expander and the second beam expander are embedded. Each of the first mirrors and the second mirrors may form an angle equal to or greater than 20 degrees with respect to a normal of the exit surface.

## Description

### Technical Field

The present disclosure relates to an optical device for exit pupil expansion (EPE), a display apparatus including the optical device for EPE, and a method of manufacturing the optical device for EPE.

### Background Art

Recently, interest in virtual reality (VR) displays and augmented reality (AR) displays has increased.

An AR display apparatus includes an optical combiner that combines light containing a virtual image and light containing a real environment and provides the resulting light to a user's field of view. The optical combiner is formed based on a waveguide and includes detailed components such as an input coupler, an output coupler, and a beam expander. Because the AR display apparatus is implemented as a wearable apparatus, factors such as the safety and weight of the optical combiner are important and it is also required to be precisely manufactured so that the given optical performance thereof is well implemented.

### Disclosure

### Technical Problem

Provided are optical device for an exit pupil expansion (EPE) that is lightweight and has an easy-to-manufacture structure, a display apparatus including the optical device for EPE, and a method of manufacturing the optical device for EPE.

### Technical Solution

According to an embodiment, an exit pupil expansion (EPE) optical device includes a first beam expander including a plurality of first mirrors and configured to expand a beam width of incident light in a first direction to output expanded light, a second beam expander including a plurality of second mirrors and configured to expand a beam width of light incident from the first beam expander in a second direction different from the first direction to output in a third direction different from the first direction and the second direction, and a waveguide which includes an exit surface through which light having passed through the first beam expander and the second beam expander is output and in which the first beam expander and the second beam expander are embedded, wherein each of the plurality of first mirrors and the plurality of second mirrors forms an angle equal to or greater than 20 degrees with respect to a normal of the exit surface.

The first direction and the second direction may be perpendicular to each other.

The waveguide may include an optical plastic material.

The angle may be equal to or greater than 20 degrees and equal to or smaller than 70 degrees.

The plurality of first mirrors may each have a lengthwise direction parallel to a fourth direction forming 45 degrees with respect to the first direction and may be arranged at certain intervals in a fifth direction perpendicular to the fourth direction.

The plurality of first mirrors may be arranged such that a length of each of the plurality of first mirrors in the fourth direction increases gradually in the fifth direction.

The plurality of second mirrors may each have a lengthwise direction parallel to the second direction and may be arranged at certain intervals in the first direction.

The EPE optical device may further include an input coupler configured to input image light generated by an image generator to the first beam expander.

The input coupler may include a total reflection mirror totally reflecting incident image light in a direction toward the first beam expander.

The plurality of first mirrors and the plurality of second mirrors may be partial reflection mirrors.

The EPE optical device may be manufactured by a room-temperature dual-mold method.

According to an embodiment, a display apparatus includes an image generator generating an image, and an exit pupil expansion (EPE) optical device configured to expand a beam width of image light formed by the image generator to provide to a user's field of view, wherein the EPE optical device includes an input coupler configured to output the image light in a first direction, a first beam expander including a plurality of first mirrors and configured to expand a beam width of incident light in the first direction to output expanded light, a second beam expander including a plurality of second mirrors and configured to expand a beam width of light incident from the first beam expander in a second direction different from the first direction to output in a third direction different from the first direction and the second direction, and a waveguide which includes an exit surface through which light having passed through the first beam expander and the second beam expander is output and in which the first beam expander and the second beam expander are embedded, wherein each of the plurality of first mirrors and the plurality of second mirrors forms an angle of 20 degrees or more with respect to a normal of the exit surface.

The display apparatus may be an augmented reality display apparatus configured to combine light incident from in front of the user and image light generated by the image generator to provide to the user.

The display apparatus may be an eye-wearable apparatus.

The waveguide may include an optical plastic material.

The angle may be equal to or greater than 20 degrees and equal to or smaller than 70 degrees.

According to an embodiment, a method of manufacturing the EPE optical device described above includes a first casting operation of forming a mold structure in which an embossed pattern having inclined surfaces corresponding to an arrangement angle of the plurality of first mirrors and the plurality of second mirrors is formed, an operation of coating the inclined surfaces with a mirror material, and a second casting operation of arranging an upper flat mold to face the mold structure with the coated inclined surfaces and injecting an optical plastic material between the mold structure and the upper flat mold.

The first casting operation may include an operation of preparing a pattern mold in which an engraved pattern having inclined surfaces corresponding to the arrangement angle of the plurality of first mirrors and the plurality of second mirrors is formed, an operation of arranging a lower flat mold to face the pattern mold and injecting a material same as the optical plastic material between the pattern mold and the lower flat mold and into the engraved pattern, and an operation of removing the pattern mold.

The first casting operation and the second casting operation may be performed at room temperature.

The mold structure and the upper flat mold may include a material same as the optical plastic material.

### Advantageous Effects

The EPE optical device described above is set such that the arrangement angle of a plurality of mirrors included therein is suitable for optical performance and manufacturing.

The EPE optical device described above may be easily manufactured by a room-temperature dual-mold method.

The display apparatus including the EPE optical device described above is lightweight and safe and is thus suitable for wearable applications.

### Description of Drawings

FIG. 1 is a perspective view illustrating a schematic configuration of an exit pupil expansion (EPE) optical device according to an embodiment.
FIG. 2 is a plan view of the EPE optical device of FIG. 1.
FIG. 3 is a cross-sectional view illustrating an AA'-line cross-section of the EPE optical device of FIG. 2.
FIG. 4 is a cross-sectional view illustrating a BB'-line cross-section of the EPE optical device of FIG. 2.
FIG. 5 is a cross-sectional view illustrating a CC'-line cross-section of the EPE optical device of FIG. 2.
FIG. 6A is a diagram illustrating an optical path through which an EPE optical device according to an embodiment combines two types of light incident in different directions and provides the resulting light to the user, and FIG. 6B is a diagram illustrating a portion of FIG. 6A at a different cross-section than FIG. 6A.
FIG. 7 illustrates a schematic structure of a display apparatus according to an embodiment.
FIG. 8 illustrates a schematic structure of a display apparatus according to another embodiment.
FIGS. 9A to 9I are diagrams describing methods of manufacturing an EPE optical device according to an embodiment.

### Mode for Invention

Hereinafter, embodiments of the present disclosure will be described in detail with reference to the accompanying drawings so that those of ordinary skill in the art may easily implement the embodiments of the present disclosure. However, the present disclosure may be embodied in many different forms and should not be construed as being limited to the embodiments set forth herein. Also, portions irrelevant to the description of the present disclosure will be omitted in the drawings for a clear description of the present disclosure, and like reference numerals will denote like elements throughout the specification.

Throughout the specification, when an element is referred to as being "connected" to another element, it may be "directly connected" to the other element or may be "electrically connected" to the other element with one or more intervening elements therebetween. Also, when a part "includes" or "comprises" a component, unless there is a particular description contrary thereto, the part may further include other components, not excluding the other components.

Also, as used herein, the terms such as "units" may refer to units that perform at least one function or operation, and the units may be implemented as hardware or software or a combination of hardware and software.

The terms used herein are those general terms currently widely used in the art in consideration of functions in the present disclosure, but the terms may vary according to the intentions of those of ordinary skill in the art, precedents, or new technology in the art. Also, in some cases, there may be terms that are optionally selected by the applicant, and the meanings thereof will be described in detail in the corresponding portions of the present disclosure. Thus, the terms used herein should be understood not as simple names but based on the meanings of the terms and the overall description of the present disclosure.

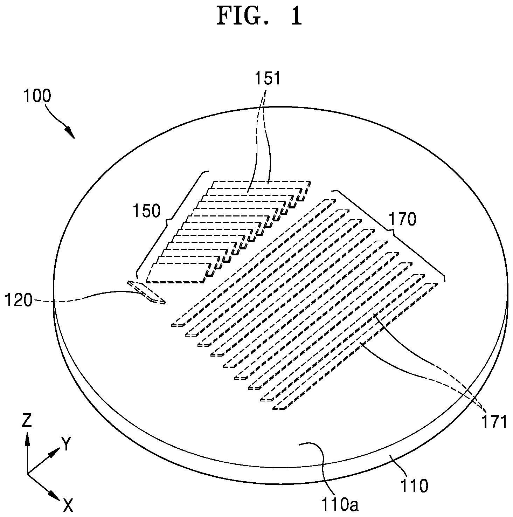

FIG. 1 is a perspective view illustrating a schematic configuration of an exit pupil expansion (EPE) optical device according to an embodiment.

As an optical device for exit pupil expansion (EPE), an EPE optical device 100 may expand a beam width of incident light in two different directions and output the resulting light. The EPE optical device 100 may provide a wide field of view (FOV) and a wide eye box.

Referring to FIG. 1, the EPE optical device 100 may include a first beam expander 150 including a plurality of first mirrors 151 and expanding a beam width of incident light in a first direction and outputting the resulting light and a second beam expander 170 including a plurality of second mirrors 171 and expanding a beam width of light incident from the first beam expander 150 in a second direction and outputting the resulting light.

The EPE optical device 100 may further include a waveguide 110, and the first beam expander 150 and the second beam expander 170 may be embedded in the waveguide 110. Light having passed through the first beam expander 150 and the second beam expander 170 may be output through an exit surface 110a of the waveguide 110.

The EPE optical device 100 may further include an input coupler 120 configured such that light transferred from the outside can be incident on the first beam expander 150, and the input coupler 120 may also be embedded in the waveguide 110. However, the present disclosure is not limited thereto.

The waveguide 110 may include an optically transparent material and may include a glass material or a transparent plastic material having a refractive index greater than 1. Here, the transparent material may refer to a material through which visible light may pass, may not have a transparency of 100 %, and may have a certain color. The waveguide 110 may include, for example, an optical plastic material having a refractive index of about 1.50 to about 1.70. The optical plastic material may have an advantage over glass in terms of weight, cost, safety, and the like.

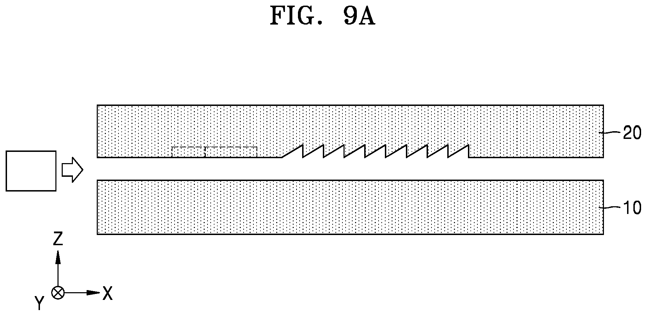

The plurality of first mirrors 151 and the plurality of second mirrors 171 embedded in the waveguide 110 may be inclined at a certain angle with respect to the exit surface 110a, and the certain angle may be set to achieve the optical performance for expanding a beam in a desired direction and also to enable easy manufacturing. The EPE optical device 100 may be manufactured by a room-temperature dual-mold method. The room temperature may refer to a range of about 15 °C to about 20 °C or about 10 °C to about 30 °C. According to this manufacturing method, interface modification or the like that may occur in the normal manufacturing process may be minimized, and performance defects due to index mismatching or the like may also be minimized. The manufacturing method will be described below with reference to FIGS. 9A to 9I.

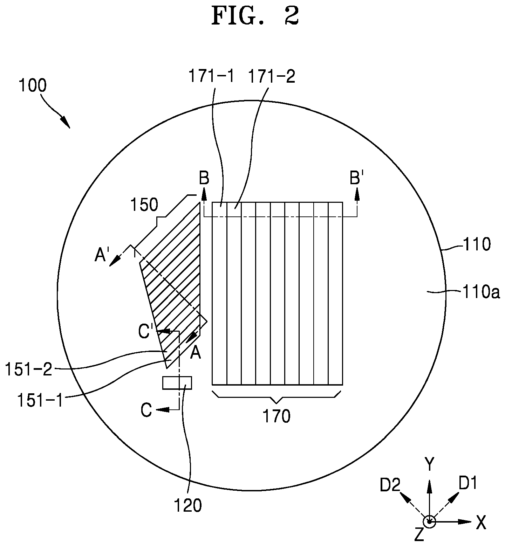

The detailed shapes of the components of the EPE optical device 100 and a corresponding optical path thereof will be described in detail with reference to FIGS. 2 to 6.

FIG. 2 is a plan view of the EPE optical device of FIG. 1, and FIGS. 3 to 5 respectively illustrate an AA'-line cross-section, a BB'-line cross-section, and a CC'-line cross-section of the EPE optical device of FIG. 2.

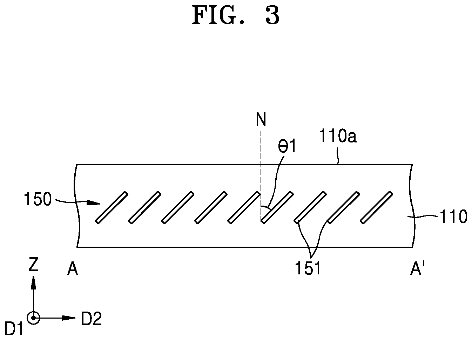

Referring to FIGS. 2 and 3, the first beam expander 150 included in the EPE optical device 100 may include a plurality of first mirrors 151. The plurality of first mirrors 151 may have a shape elongated in a D1 direction, for example, a rectangular shape or a strip shape, and may be arranged at certain intervals in a D2 direction perpendicular to the D1 direction. The D1 direction may be a direction forming a certain angle, for example, 45 degrees, with respect to the X direction on the XY plane. However, this is merely an example, and the angle formed between the D1 direction and the X direction may be somewhat modified. The first mirrors 151 may be referred to as a first first mirror 151-1, a second first mirror 151-2, and the like in the arrangement order thereof, that is, along the optical path.

The first mirrors 151 may have different lengths and may be arranged such that the lengths thereof increase gradually in the D2 direction. That is, the first mirrors 151 may be arranged such that the lengths in the D1 direction increase gradually in the D2 direction. However, the present disclosure is not limited thereto, and some or all of the first mirrors 151 may have the same length in the D1 direction.

The first mirrors 151 may be arranged to be inclined with respect to a normal N of the exit surface 110a of the waveguide 110. An angle θ1 at which the first mirrors 151 are inclined with respect to the normal N of the exit surface 110a may be equal to or greater than 20 degrees . The angle θ1 may be equal to or greater than 20 degrees and equal to or smaller than 70 degrees. In an EPE optical device of the related art, θ1 is generally set to 0 degree or a similar angle. In the case of having such an angle, it is difficult to manufacture the first mirrors 151 together with the second mirrors 171 of the second beam expander 170, that is, in the same casting operation, as in the manufacturing method described below. Unlike this, in the case of the EPE optical device 100 according to an embodiment, the arrangement angle of the first mirrors 151 may be set to be suitable for the beam expansion direction and the exit direction and also to be easy to manufacture.

The first mirrors 151 may be partial reflection mirrors. The first mirrors 151 may reflect a portion of incident light and transmit another portion thereof, and the reflectivity of the first mirror 151 may be, for example, about 20 % to about 30 %.

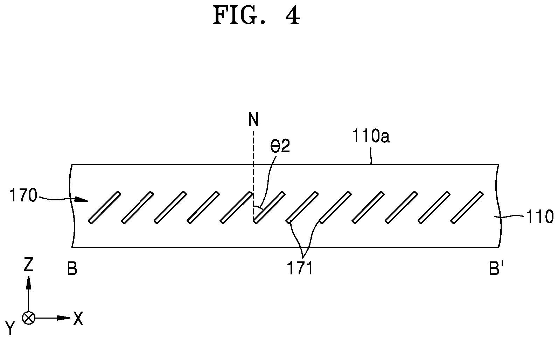

Referring to FIGS. 2 and 4, the second beam expander 170 included in the EPE optical device 100 may include a plurality of second mirrors 171. The plurality of second mirrors 171 may have a shape elongated in the Y direction, for example, a rectangular shape or a strip shape having a lengthwise direction that is the Y direction, and may be arranged at certain intervals in the X direction. The second mirrors 171 may be referred to as a first second mirror 171-1, a second second mirror 171-2, and the like in the arrangement order thereof, that is, along the optical path.

The second mirrors 171 may have the same length. However, the present disclosure is not limited thereto, and some or all of the second mirrors 171 may have different lengths and may be arranged in order of length similarly to the first beam expander 150.

The second mirrors 171 may be arranged to be inclined with respect to the normal N of the exit surface 110a of the waveguide 110. An angle θ2 at which the second mirrors 171 are inclined with respect to the normal N of the exit surface 110a may be equal to or greater than 20 degrees. The angle θ2 may be equal to or greater than 20 degrees and equal to or smaller than 70 degrees. The angle θ2 may be set such that the beam width of light exiting from the first beam expander 150 and incident on the second beam expander 170 may be expanded and exit through the exit surface 110a. Light reflected by the second mirror 171 should be incident on the exit surface 110a at an angle smaller than a total reflection critical angle, that is, the angle formed between the incidence direction thereof and the normal N of the exit surface 110a should be smaller than the total reflection critical angle, so that the light may be output to the outside not being totally reflected by the exit surface 110a. The arrangement angle of the second mirrors 171 may be set to satisfy this requirement.

The second mirrors 171 may also be partial reflection mirrors similar to the first mirrors 151. The second mirrors 171 may reflect a portion of incident light and transmit another portion thereof, and the reflectivity of the second mirror 171 may be, for example, about 20 % to about 30 %.

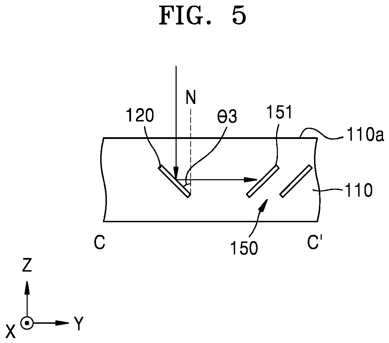

Referring to FIG. 2 and FIG. 5, the input coupler 120 may include a mirror inclined at an angle θ3 with respect to the normal N. The input coupler 120 may be a total reflection mirror. That is, the input coupler 120 may reflect most of the incident light, for example, 90 % or more or 99 % or more. The angle θ3 is not particularly limited and may be set such that light incident on the input coupler 120 from a certain position outside the waveguide 110 may be reflected toward the first beam expander 150. For example, as illustrated in FIG. 5, light incident in the -Z direction may be reflected in the Y direction by the input coupler 120; however, the present disclosure is not limited thereto.

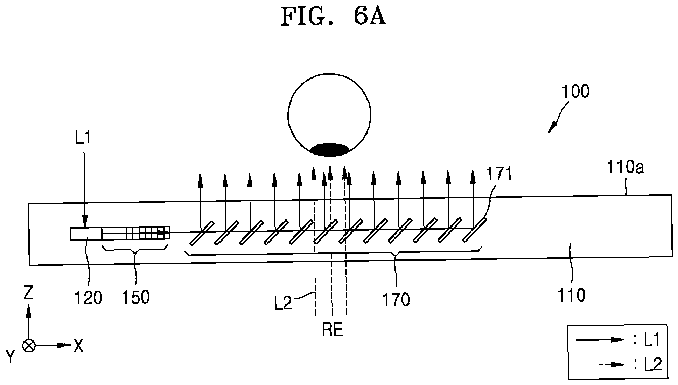

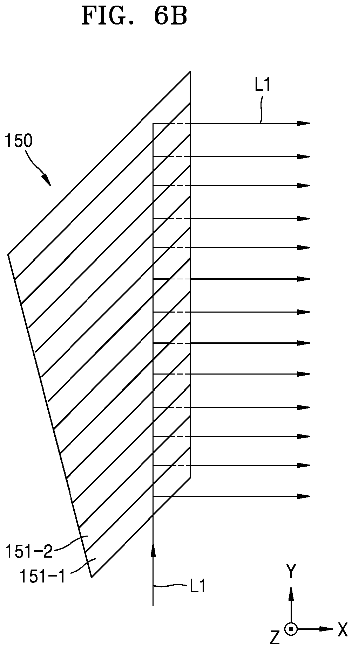

FIG. 6A is a diagram illustrating an optical path through which an EPE optical device according to an embodiment combines types of light incident in different directions and provides the resulting light to the user, and FIG. 6B illustrates a portion of FIG. 6A at a different cross-section than FIG. 6A.

First light L1 may be provided from the outside of the EPE optical device 100 to the input coupler 120 in the waveguide 110. The first light L1 may be image light provided by an image generator. As such, the incident first light L1 may be reflected in a direction toward the first beam expander 150 by the input coupler 120 as mentioned in FIG. 5.

Referring to FIG. 6B, the first light L1 incident on the first beam expander 150 may be reflected by the first mirrors 151. The first mirrors 151 may be partial reflection mirrors, and thus, a portion of the first light L1 may be reflected by the first first mirror 151-1 located at the frontmost on the optical path and another portion thereof may be transmitted through the first first mirror 151-1 and incident on the second first mirror 151-2. The second first mirror 151-2 may also reflect a portion of the first light L1 and transmit another portion thereof. Through this optical path, the beam width of the first light L1 incident on the first beam expander 150 may be expanded in a first direction and the resulting light may be output in a second direction different from the first direction and directed toward the second beam expander 170. The first direction may be the Y direction and the second direction may be the X direction; however, the present disclosure is not limited thereto.

Referring back to FIG. 6A, the first light L1 with a beam width expanded in the first direction (Y direction) while passing through the first beam expander 150 may be incident on the second beam expander 170. The second mirrors 171 of the second beam expander 170 may be partial reflection mirrors, and thus, a portion of the first light L1 incident on the first second mirror 171 may be reflected and another portion thereof may be transmitted through the first second mirror 171 and incident on the second second mirror 171. The second second mirror 171 may also reflect a portion of the incident first light L1 and transmit another portion thereof. Through this optical path, the beam width of the first light L1 incident on the second beam expander 170 with a beam width expanded in the first direction (Y direction) may be expanded in the second direction (X direction) and the resulting light may be output in a third direction that is different from the first direction and the second direction. The first light L1 output in the third direction may be incident on the exit surface 110a at an angle smaller than the total reflection critical angle. That is, the angle formed between the incidence direction and the normal of the exit surface 110a may be smaller than the total reflection critical angle and may be close to 0 degrees as illustrated. The first light L1 may be transmitted through the exit surface 110a and directed toward the user's field of view. As such, the first light L1 expanded in the first direction and the second direction may be provided to the user's field of view.

Moreover, the EPE optical device 100 may be substantially transparent with respect to second light L2 incident in front of the user's field of view. As described above, because the first mirrors 151 and the second mirrors 171 included in the EPE optical device 100 are structured to reflect only a portion of the light incident in a certain direction and the reflectivity thereof is about 20 % to about 30 %, most of the second light L2, for example, 70 % or more, may be transmitted through the EPE optical device 100 and transmitted to the user's field of view.

As such, the user may recognize the first light L1 and the second light L2 simultaneously by the EPE optical device 100. In other words, the user may recognize a composite image in which an image included in the first light L1 and a real environment (RE) included in the second light L2 are combined by the EPE optical device 100.

The EPE optical device 100 according to an embodiment may have a structure capable of being manufactured by a room-temperature dual-mold method by using a lightweight and safe optical plastic material and may be applied to various display apparatuses and electronic apparatuses.

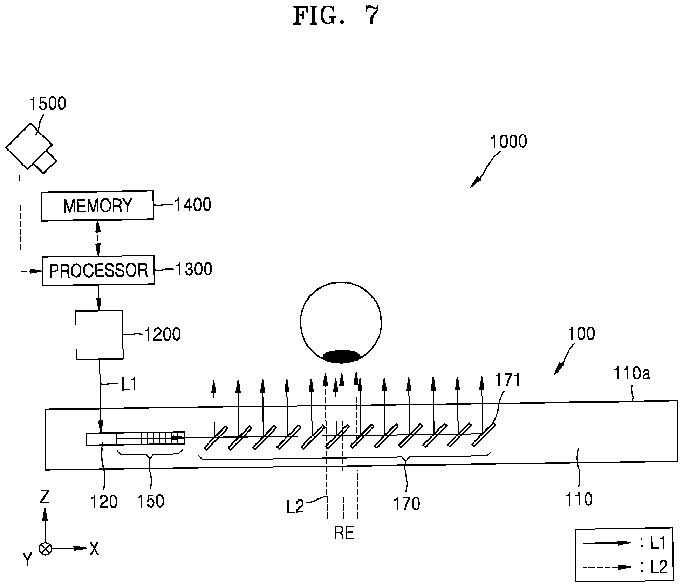

FIG. 7 illustrates a schematic structure of a display apparatus according to an embodiment.

A display apparatus 1000 may be a see-through display apparatus that provides the user with a combination of first light L1, which is image light provided by an image generator 1200, and second light L2, which is ambient light containing a real environment in front of the user. The display apparatus 1000 may also be used as an augmented reality (AR) apparatus by being controlled to output an additional image suitable for an environment observed by the user. The AR apparatus may be a display apparatus that further increases the effect of reality by combining and displaying a virtual object or information on an environment of the real world. For example, at the position of an observer, additional information about an environment provided by the real world may be formed by the image generator 1200 and provided to the observer. The AR apparatus may be applied to a ubiquitous environment or an Internet of Things (IoT) environment.

The display apparatus 1000 may include an image generator 1200 generating an image and an EPE optical device 100 expanding a beam width of image light formed by the image generator 1200 and providing the resulting light to the user's field of view. The display apparatus 1000 may further include a memory 1400 and a processor 1300 controlling the display apparatus 1000. For example, the processor 1300 may control the display apparatus 1000 to output an additional image suitable for an environment observed by the user. The memory 1400 may store code of programs to be executed by the processor 1300, other data, and the like. The display apparatus 1000 may further include a sensor 1500 for recognizing a user environment. The sensor 1500 may include various types of cameras.

The image generator 1200 may generate first light L1 containing an image. The first light L1 containing an image may be simply referred to as image light L1. The image generator 1200 may include a display device (not illustrated) that forms image light L1 by modulating light according to image information to be displayed to the observer and one or more optical devices (not illustrated) that transmit the image light L1 formed by the display device toward the EPE optical device 100.

The type of an image formed by the display device included in the image generator 1200 is not particularly limited and the image may be, for example, a two-dimensional image or a three-dimensional image. The three-dimensional image may be, for example, a stereo image, a hologram image, a light field image, or an integral photography (IP) image and may also include a multi-view or super multi-view image.

The display device may include, for example, a liquid crystal on silicon (LCoS) device, a liquid crystal display (LCD) device, an organic light emitting diode (OLED) display device, a digital micromirror device (DMD) and may also include a next-generation display device such as a micro LED or a quantum dot (QD) LED. When the display device included in the image generator 1200 is a non-luminous device such as an LCD, a light source providing light for forming an image may be further included in the display device.

The image generator 1200 may include an optical device such as a path switching member or a lens that transmits the image light L1 formed by the display device to the EPE optical device 100. For example, any one of a beam splitter for changing the path of the image light L1, a relay lens for expanding or reducing the image light, a collimating lens for collimating the image light L1 as parallel light, and a spatial filter for noise removal may be included therein; however, the present disclosure is not limited thereto, and various known optical systems may be used therein.

As described above, the EPE optical device 100 may expand an eye box of light incident onto the input coupler 120. That is, the first light L1 containing an image generated by the image generator 1200 may be incident on the first beam expander 150 by the input coupler 120, the beam width thereof may be expanded in one direction by the first beam expander 150 and incident on the second beam expander 170, and the beam width may be expanded in another direction by the second beam expander 170 and output.

Moreover, the EPE optical device 100 may be substantially transparent with respect to second light L2 that is ambient light incident in front of the user. The second light L2 that is ambient light may be simply referred to as ambient light L2. The EPE optical device 100 may function as an optical combiner that combines the image light L1 with an eye box expanded as such and the ambient light L2 and provides the resulting light to the user's eye. That is, the user may enjoy a composite image, for example, an AR image, in which the image light L1 and the ambient light L2 are combined through the EPE optical device 100.

For AR representation, the processor 1300 may control the display apparatus 1000 such that the image light L1 may include additional information corresponding to the user environment. For example, the user environment may be recognized by the sensor 1500, and an additional information image suitable therefor may be formed by the image generator 1200 by considering the recognition result.

The second light L2 combined with the first light L1 that is image light has been described above as an ambient light containing a real environment; however, the present disclosure is not limited thereto. For example, the second light L2 may be an image formed by another image device, and in this case, the display apparatus 1000 may be referred to as a multi-image display apparatus that displays two images together.

The display apparatus 1000 has been described as including an optical system configuration provided for a single eye; however, it is not limited thereto and may be implemented as two optical systems separately provided for both eyes.

The display apparatuses described above may be configured in a wearable form. All or some of the components of the display apparatuses may be configured in a wearable form.

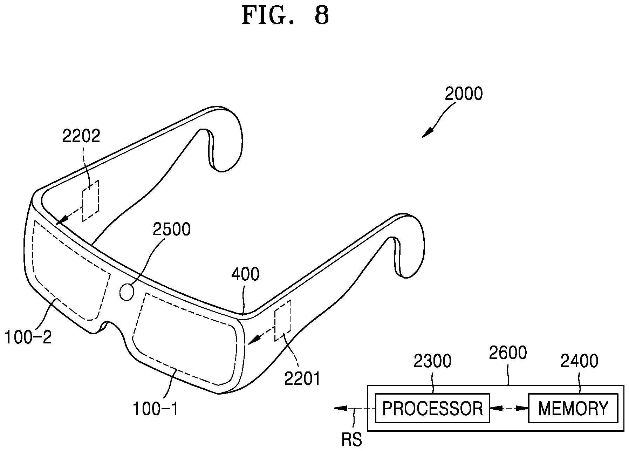

FIG. 8 illustrates a schematic structure of a display apparatus according to another embodiment.

A display apparatus 2000 may be similar to the display apparatus 1000 described in FIG. 7 and may be different therefrom in that it is implemented as a glasses-type apparatus and an optical system applied to both eyes.

The display apparatus 2000 may include a glass body 400, EPE optical devices 100-1 and 100-2 may be respectively arranged in both lens portions of the glass body 400, and image generators 2201 and 2202 generating and transmitting image light to the EPE optical devices 100-1 and 100-2 may be respectively arranged in leg portions of the glass body 400. The EPE optical devices 100-1 and 100-2 and the image generators 2201 and 2202 may be substantially the same as the EPE optical device 100 and the image generator 1200 described in FIG. 7.

A sensor 2500 for recognizing a user environment may be arranged in a center portion of the glass body 400. The sensor 2500 may include various types of cameras. Also, various other sensors may be further arranged in the glass body 400. For example, an inertia sensor or a position sensor for sensing position, orientation, sudden acceleration, or the like may be mounted in the glass body 400.

The processor 2300 and the memory 2400 may be provided as a remoting module 2600. The glass body 400 may include a communication module that communicates with the remoting module 2600 and transmits a received remote control signal RS to the image generators 2201 and 2202.

Information obtained from the sensor 2500 for recognizing the user environment or other sensors may be reflected in a virtual image generated by the image generators 2201 and 2202 through the remote control signal RS generated by the remoting module 2600.

In FIG. 8, the display apparatus 2000 is illustrated as being implemented as a glasses type; however, it is not limited thereto and may be applied as various eye-wearable apparatuses such as a head mounted display (HMD) and a goggle-type display and may also have a form such as a contact lens that is directly worn on an eyeball.

The glasses-type display apparatus 2000 illustrated in FIG. 8 may be operated in conjunction with an electronic apparatus such as a smart phone and may provide virtual reality (VR), augmented reality (AR), or mixed reality (MR).

The display apparatuses 1000 and 2000 described above may be applied to various fields. For example, the display apparatuses 1000 and 2000 may be used in combination with general display apparatuses, televisions, monitors, or the like and may be applied to various products such as mobile devices, head-up displays of vehicles, augmented/virtual reality devices, large signage, wearable displays, rollable TVs, and stretchable displays.

For example, when the display apparatus 1000 functions as a head-up display (HUD) of a vehicle, the EPE optical device may be coupled to a front windshield of the vehicle. Accordingly, the driver may secure a forward view and may also be provided with image information suitable for the driving environment.

FIGS. 9A to 9I are diagrams describing methods of manufacturing an EPE optical device according to an embodiment.

The manufacturing method according to an embodiment may include an operation of forming a mold structure in which an embossed pattern having inclined surfaces corresponding to an arrangement angle of a plurality of mirrors to be formed is formed, an operation of coating the inclined surfaces with a mirror material, and an operation of arranging an upper flat mold to face the mold structure with the coated inclined surfaces and injecting an optical plastic material between the mold structure and the upper flat mold.

These processes may be performed at room temperature, for example, 15 °C to 25 °C or 10 °C to 30 °C, by using the same optical plastic material or an optical plastic material having the same refractive index. Thus, there may be almost no interface modification that may occur in a general manufacturing process or a high-temperature process, and there may be almost no performance degradation or the like caused by index mismatching due to interface modification.

FIGS. 9A to 9D illustrate a first casting operation of forming a mold structure in which an embossed pattern having inclined surfaces corresponding to an arrangement angle of a plurality of mirrors is formed.

First, referring to FIG. 9A, a pattern mold 20 with an engraved pattern formed therein may be prepared, and a lower flat mold 10 and the pattern mold 20 may be arranged to face each other. The engraved pattern formed in the pattern mold 20 may be a pattern having inclined surfaces corresponding to an arrangement angle of a plurality of first mirrors and a plurality of second mirrors as described above. The engraved pattern may also further include an inclined surface corresponding to an arrangement angle of a total reflection mirror included in an input coupler.

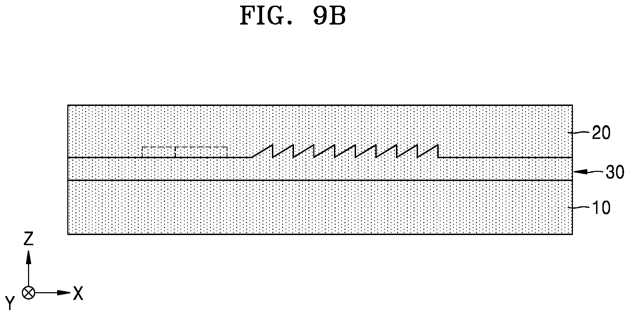

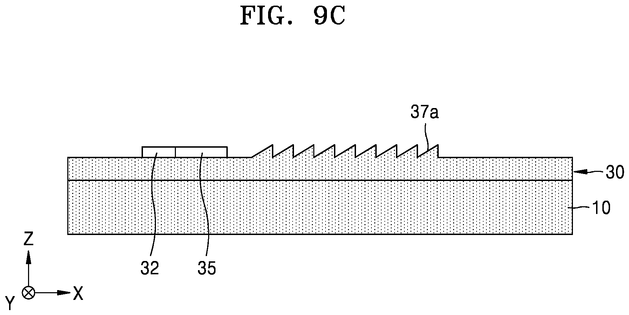

Next, by arranging the pattern mold 20 and the lower flat mold 10 to face each other and injecting an optical plastic material, as illustrated in FIG. 9B, the space between the pattern mold 20 and the lower flat mold 10 and the inside of the engraved pattern may be filled with the optical plastic material to form a mold structure 30. In this case, the optical plastic material used herein may be the same material or a material having the same refractive index as the lower flat mold 10. Next, by removing the pattern mold 20, a structure in which the mold structure 30 having a desired embossed pattern is arranged may be formed on the lower flat mold 10 as illustrated in FIG. 9C.

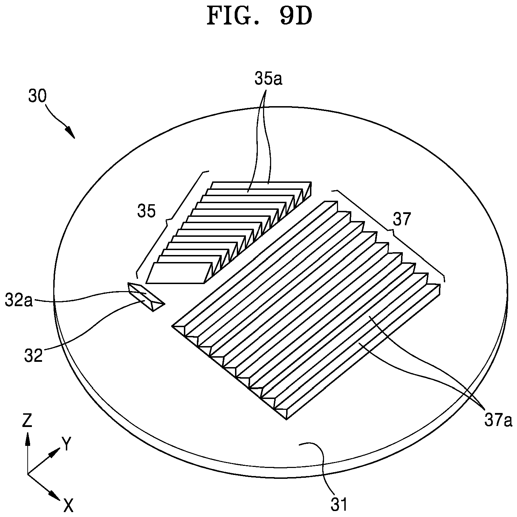

FIG. 9D is a perspective view illustrating the mold structure 30 of FIG. 9C in detail. The mold structure 30 may include an input coupler pattern 32 including an inclined surface 32a formed on a support layer 31, a first beam expander pattern 35 including a plurality of inclined surfaces 35a, and a second beam expander pattern 37 including a plurality of inclined surfaces 37a.

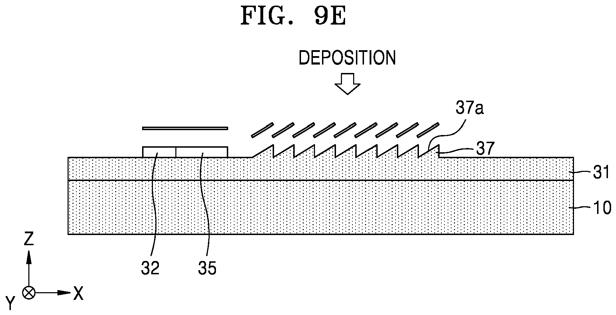

FIG. 9E illustrates an operation of coating a plurality of inclined surfaces 32a, 35a, and 37a with a mirror material. For the mirror material coating, a deposition process may be used and various known methods such as sputtering may be used. The mirror material used to coat the inclined surfaces 35a of the first beam expander pattern 35 and the inclined surfaces 37a of the second beam expander pattern 37 may be a partial reflection mirror material, for example, a material having a reflectivity of 20 % to 30 %. The inclined surface of the input coupler pattern 32 may be coated with a mirror material having a reflectivity of 90 % or more.

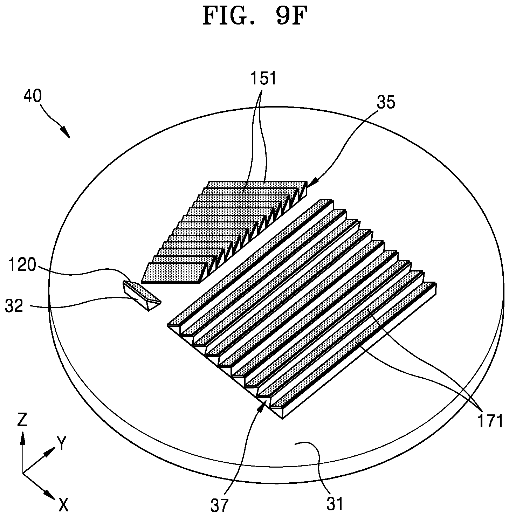

As such, by coating the inclined surfaces of the input coupler pattern 32, the first beam expander pattern 35, and the second beam expander pattern 37 with a mirror material, as illustrated in FIG. 9F, a mold structure 40 may be formed in which the input coupler pattern 32 is coated with a mirror material to form an input coupler 120, a plurality of first mirrors 151 are formed on the first beam expander pattern 35 to form a first beam expander 150, and a plurality of second mirrors 171 are formed on the second beam expander pattern 37 to form a second beam expander 170.

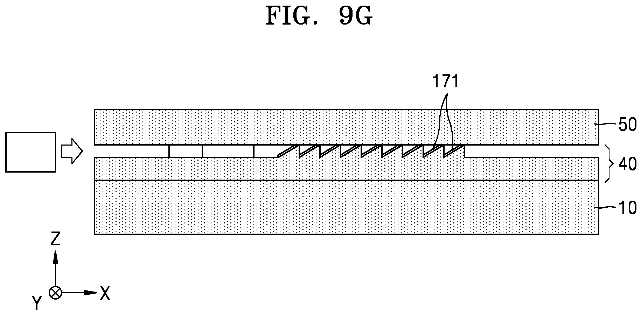

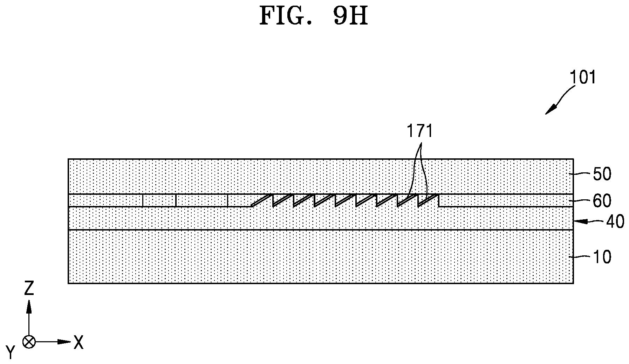

Next, as illustrated in FIG. 9G, in a second casting operation, an upper flat mold 50 may be arranged on the mold structure 40 and an optical plastic material may be injected between the mold structure 40 and the upper flat mold 50. In this case, the optical plastic material used herein may be the same material or a material having the same refractive index as the optical plastic material used in the first casting operation. The upper flat mold 50 may also include the same material or a material having the same refractive index as the optical plastic material. The space between the mold structure 40 and the lower flat mold 10 may be filled with an optical plastic material to form an EPE optical device 101 as illustrated in FIG. 9H.

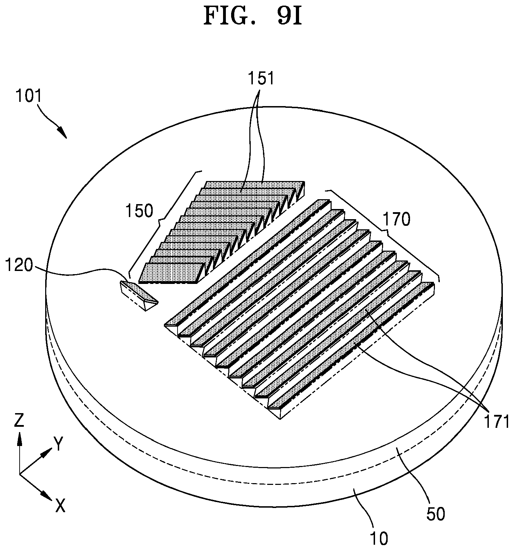

FIG. 9I is a perspective view corresponding to FIG. 9H. The EPE optical device 101 illustrated in FIG. 9I may be substantially the same as the EPE optical device 100 illustrated in FIG. 1. In the above manufacturing method, because the first casting operation and the second casting operation are performed at room temperature by using the same optical plastic material, almost no interface defects may occur. That is, a dotted line in FIG. 9I is illustrated merely for convenience in describing the manufacturing process, and the manufactured EPE optical device 101 has almost no interface defects and thus almost no index mismatching, so it may be regarded that there is substantially no optical interface.

The foregoing descriptions of the present disclosure are merely examples, and those of ordinary skill in the art will readily understand that various modifications may be made therein without materially departing from the spirit or features of the present disclosure. Therefore, it is to be understood that the embodiments described above should be considered in a descriptive sense only and not for purposes of limitation. For example, each component described as a single type may also be implemented in a distributed manner, and likewise, components described as being distributed may also be implemented in a combined form.

The EPE optical device, the display apparatus, and the EPE optical device manufacturing method according to the present disclosure have been described above with reference to the embodiments illustrated in the drawings in order to facilitate an understanding thereof; however, this is merely an example, and those of ordinary skill in the art will understood that various modifications and other equivalent embodiments may be made therefrom. Therefore, the described embodiments should be considered in a descriptive sense rather than in a limitative sense. The scope of the present disclosure should be defined by the attached claims rather than by the above description, and all differences within the scope equivalent thereto should be construed as being included therein.

## Claims

1. An exit pupil expansion (EPE) optical device comprising:
a first beam expander comprising a plurality of first mirrors and configured to expand a beam width of incident light in a first direction output expanded light;
a second beam expander comprising a plurality of second mirrors and configured to expand a beam width of light incident from the first beam expander in a second direction different from the first direction to output in a third direction different from the first direction and the second direction; and
a waveguide which includes an exit surface through which light having passed through the first beam expander and the second beam expander is output and in which the first beam expander and the second beam expander are embedded,
wherein each of the plurality of first mirrors and the plurality of second mirrors forms an angle equal to or greater than 20 degrees with respect to
a normal of the exit surface.

2. The EPE optical device of claim 1, wherein the first direction and the second direction are perpendicular to each other.

3. The EPE optical device of claim 1, wherein the waveguide comprises an optical plastic material.

4. The EPE optical device of claim 1, wherein the angle is equal to or greater than 20 degrees and equal to or smaller than 70 degrees.

5. The EPE optical device of claim 1, wherein the plurality of first mirrors each have a lengthwise direction parallel to a fourth direction forming 45 degrees with respect to the first direction and are arranged at certain intervals in a fifth direction perpendicular to the fourth direction.

6. The EPE optical device of claim 5, wherein the plurality of first mirrors are arranged such that a length of each of the plurality of first mirrors in the fourth direction increases gradually in the fifth direction.

7. The EPE optical device of claim 5, wherein the plurality of second mirrors each have a lengthwise direction parallel to the second direction and are arranged at certain intervals in the first direction.

8. The EPE optical device of claim 1, further comprising an input coupler configured to input image light generated by an image generator to the first beam expander.

9. The EPE optical device of claim 8, wherein the input coupler comprises a total reflection mirror totally reflecting incident image light in a direction toward the first beam expander.

10. The EPE optical device of claim 1, wherein the plurality of first mirrors and the plurality of second mirrors are partial reflection mirrors.

11. The EPE optical device of claim 1, wherein the EPE optical device is manufactured by a room-temperature dual-mold method.

12. A display apparatus comprising:
an image generator generating an image; and
an exit pupil expansion (EPE) optical device configured to expand a beam width of image light formed by the image generator to provide to a user's field of view,
wherein the EPE optical device comprises:
an input coupler configured to output the image light in a first direction;
a first beam expander comprising a plurality of first mirrors and configured to expand a beam width of incident light in the first direction to output expanded light;
a second beam expander comprising a plurality of second mirrors and
configured to expand a beam width of light incident from the first beam expander in a second direction different from the first direction to output in a third direction different from the first direction and the second direction; and
a waveguide which includes an exit surface through which light having passed through the first beam expander and the second beam expander is output and in which the first beam expander and the second beam expander are embedded,
wherein each of the plurality of first mirrors and the plurality of second mirrors forms an angle equal to or greater than 20 degrees with respect to
a normal of the exit surface.

13. The display apparatus of claim 12, wherein the display apparatus is an augmented reality display apparatus configured to combine light incident from in front of the user and image light generated by the image generator to provide to the user.

14. The display apparatus of claim 12, wherein the display apparatus is an eye-wearable apparatus.

15. A method of manufacturing the EPE optical device of claim 1, the method comprising:
a first casting operation of forming a mold structure in which an embossed pattern having inclined surfaces corresponding to an arrangement angle of the plurality of first mirrors and the plurality of second mirrors is formed; an operation of coating the inclined surfaces with a mirror material; and
a second casting operation of arranging an upper flat mold to face the mold structure with the coated inclined surfaces and injecting an optical plastic material between the mold structure and the upper flat mold.
